# EUROPÄISCHE PATENTSCHRIFT

(11) **EP 1 871 147 B1**
(45) Veröffentlichungstag und Bekanntmachung des Hinweises auf die Patenterteilung: **02.09.2009**
(21) Anmeldenummer: 06012770.1
(22) Anmeldetag: 21.06.2006
(51) Int. Cl.: H05B 41/00

(54) **Verfahren und EVG zum Zünden einer Entladungslampe**
Method and ballast to start discharge lamp
Procedé et ballast d'allumage de lampes à décharge

(43) Veröffentlichungstag der Anmeldung: 26.12.2007
(73) Patentinhaber: Osram Gesellschaft mit beschränkter Haftung, 81543 München (DE)
(72) Erfinder: Busse, Olaf, 80686 München (DE); Mayer, Siegfried, 85452 Moosinning (DE); Storm, Arwed, 85221 Dachau (DE)
(74) Vertreter: Raiser, Franz

(56) Entgegenhaltungen:
- US-A- 6 127 780
- PATENT ABSTRACTS OF JAPAN Bd. 1999, Nr. 03, 31. März 1999 (1999-03-31) & JP 10 321192 A (TOSHIBA LIGHTING & TECHNOL CORP), 4. Dezember 1998 (1998-12-04)

## Beschreibung

### Technisches Gebiet

Die Erfindung betrifft ein Verfahren zum Zünden einer Entladungslampe. Sie betrifft auch ein elektronisches Vorschaltgerät für eine Entladungslampe, eine Entladungslampe, an der ein solches Vorschaltgerät angeordnet ist, sowie einen Mikrocontroller zur Verwendung in einem solchen elektronischen Vorschaltgerät.

### Stand der Technik

Entladungslampen, und zwar sowohl Hochdruckentladungslampen als auch Niederdruckentladungslampen, benötigen zur Zündung hohe Spannungen. Solche hohe Spannungen werden von elektronischen Vorschaltgeräten zur Verfügung gestellt.

An sich ist die erforderliche Zündspannung temperaturabhängig. Bei Umgebungstemperaturen von etwa 60° C liegt die erforderliche Zündspannung z. B. deutlich niedriger als bei Umgebungstemperaturen von -25° C.

Die Entladungslampen umfassen eine Halbbrückenschaltung. Die Halbbrücke wird im Stand der Technik mit einer festen Frequenz in der Nähe der Resonanzfrequenz der Lastseite (d. h. der Halbbrücke mit weiteren Zusatzelementen) angesteuert. Die Frequenz ist so gewählt, dass die aufgrund des lastseitigen Schwingungsverhaltens in Antwort auf die Frequenz erzeugte Zündspannung unabhängig von der jeweils herrschenden Temperatur ausreichend ist. Aus der EP 1 337 133 A2 ist es bekannt, eine Frequenz ausgehend von einem relativ hohen Wert allmählich zu erniedrigen, bis eine Zündung erfolgt.

### Darstellung der Erfindung

Es ist Aufgabe der Erfindung, der Temperaturabhängigkeit des Zündverhaltens von Entladungslampen in verbesserter Weise Rechnung zu tragen.

Die Aufgabe wird durch ein Verfahren nach Patentanspruch 1, ein elektronisches Vorschaltgerät nach Patentanspruch 4, eine Entladungslampe nach Patentanspruch 7 und einen Mikrocontroller nach Patentanspruch 8 gelöst.

Das erfindungsgemäße Verfahren zum Zünden einer Entladungslampe umfasst somit die Schritte:
- Bereitstellen einer Tabelle, in der Temperaturwerten Frequenzwerte zugeordnet sind,
- Messen der Temperatur der Lampe oder der Lampenumgebung,
- Definieren eines der gemessenen Temperatur zugeordneten Zündfrequenzwerts anhand der Tabelle,
- Beaufschlagen der Lampe mit einer Wechselspannung, die die Zündfrequenz hat (d. h. einer Spannung, die mit der Zündfrequenz variiert).

Die Erfindung stellt erstmals ein Zündverfahren bereit, bei dem die Frequenz von der Umgebungstemperatur abhängig gewählt wird. Durch die auf diese Weise bewirkte präzisere Zündung werden die Anforderungen an die Bauteile des elektronischen Vorschaltgerätes reduziert. Beispielsweise kann die Lampendrossel im Vergleich zu bisherigen Dimensionierungen in der Baugröße (Volumen) kleiner ausgelegt werden.

Bei einer bevorzugten Ausführungsform umfasst die Tabelle zumindest zwei Wertepaare aus Temperaturwert und Frequenz. Beim Definieren des Zündfrequenzwerts wird zwischen den Werten aus der Tabelle interpoliert. Auch wenn nichtlineare Interpolationsverfahren möglich sind, erfolgt hierbei vorzugsweise eine lineare Interpolation zum Definieren des Zündfrequenzwerts.

Eine lineare Interpolation bedeutet bei der Verwendung von zwei Eck-Wertepaaren aus Temperaturwert und Frequenzwert, dass ermittelt wird, wo ein bestimmter Temperaturwert zwischen zwei Temperaturwerten der Eck-Wertepaare liegt. Liegt der Temperaturwert, dem ein Frequenzwert zuzuordnen ist, genau zwischen zwei Temperaturwerten, für die ein Wertepaar in der Tabelle existiert, dann liegt auch der Frequenzwert, der diesem Temperaturwert zugeordnet wird, genau zwischen den Frequenzwerten, die in dem Wertepaar angegeben sind. Liegt ein Temperaturwert auf zwei Dritteln der Strecke bei linearer Darstellung zwischen zwei Eck-Temperaturwerten, so wird diesem ein Frequenzwert zugeordnet, der ebenfalls auf zwei Dritteln der Strecke bei linearer Darstellung zwischen den beiden Frequenzwerten liegt, die den beiden Eck-Temperaturwerten zugeordnet sind.

Das Interpolationsverfahren, insbesondere die lineare Interpolation, hat den Vorteil, dass die Tabelle nicht eine hohe Zahl von einzelnen Temperaturwerten umfassen muss, sondern dass lediglich für besonders niedrige und für besonders hohe Umgebungstemperaturen jeweils Frequenzwerte ermittelt werden müssen. Die übrigen Frequenzwerte ergeben sich dann automatisch durch Berechnen. Das Erstellen der Tabelle ist dadurch erleichtert, denn die Tabellenwerte müssen in aller Regel empirisch, z. B. anhand von Muster-EVGs (elektronischen Vorschaltgeräten), ermittelt werden.

Bei einer bevorzugten Ausführungsform erfolgt vor dem Schritt des Beaufschlagens der Lampe mit einer Wechselspannung, die die Zündfrequenz hat, noch ein Vorheizschritt, und zwar wird hierbei die Lampe mit einer Wechselspannung beaufschlagt, die eine andere, vorzugsweise höhere Frequenz als die Zündfrequenz hat. Ein solches Vorheizen der Lampenwendeln ist im Stand der Technik bereits üblich und dauert typischerweise 150 ms bis 1000 ms, bevorzugt 250 ms bis 400 ms, typischerweise ca. 300 ms. Die Vorheizzeit ist so kurz, dass sich die eigentliche Lampentemperatur oder die der Lampenumgebung nicht ändert, so dass der Schritt des Messens unbeeinflusst bleibt.

Das erfindungsgemäße elektronische Vorschaltgerät für eine Entladungslampe umfasst:
- einen Wechselspannungsgenerator, der zum Zünden und Betreiben der Entladungslampe eine Wechselspannung mit verschiedenen Frequenzen erzeugt, und
- eine Steuereinheit, die Steuersignale für den Wechselspannungsgenerator erzeugt, mit denen die Frequenz der Wechselspannung festgelegt wird.

Das elektronische Vorschaltgerät ist dadurch gekennzeichnet, dass ein Temperatursensor bereitgestellt ist, dessen Temperaturmesswerte dem Steuergerät zuführbar sind. (Das Steuergerät ist so ausgelegt, dass die Steuersignale, die die Frequenz der Wechselspannung festlegen, in Abhängigkeit von solchen Temperaturmesswerten erzeugt werden.)

Bevorzugt ist der Steuereinheit ein Speicher zugeordnet, in dem eine Tabelle mit Wertepaaren aus Temperaturwert und Frequenzwert abgelegt ist. Die Steuereinheit ist dazu ausgelegt, durch Interpolation von Werten aus der Tabelle zu einem von dem Temperatursensor empfangenen Temperaturmesswert eine Zündfrequenz zu berechnen und den Wechselspannungsgenerator so anzüsteuern, dass er eine Wechselspannung abgibt, die die berechnete Zündfrequenz hat. Die Vorteile des Interpolationsverfahrens waren oben bereits erläutert worden.

Bei einer besonders vorteilhaften Ausgestaltung des erfindungsgemäßen elektronischen Vorschaltgeräts ist die Steuereinheit in einem Mikrocontroller ausgebildet, in den der Temperatursensor integriert ist. Ein solcher Mikrocontroller umfasst üblicherweise eine Chipplatte, die in einem Gehäuse versiegelt ist. Unter dem Begriff "in den Mikrocontroller integriert" ist vorliegend zu verstehen, dass der Temperatursensor zumindest in dem versiegelten Gehäuse aufgenommen ist. Die einfachste Ausführungsform hierbei ist, dass der Temperatursensor ebenfalls auf der Chipplatte angeordnet ist. Als Temperatursensor kann beispielsweise ein NTC-Widerstand (Widerstand mit negativen Temperaturkoeffizienten) verwendet werden.

Die Bereitstellung einer Entladungslampe mit einem erfindungsgemäßen elektronischen Vorschaltgerät stellt einen Aspekt der Erfindung dar. Die Entladungslampe kann eine Hochdruckentladungslampe oder eine Niederdruckentladungslampe sein.

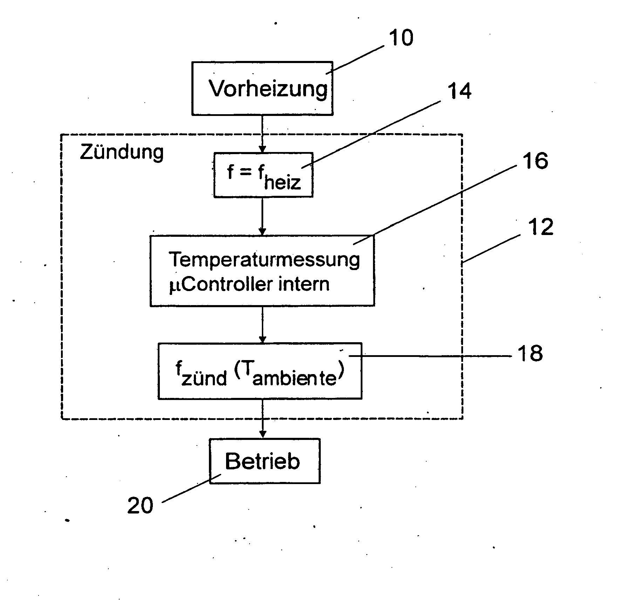

### Kurze Beschreibung der Zeichnung(en)

Nachfolgend wird eine bevorzugte Ausführungsform der Erfindung unter Bezug auf die Zeichnung beschrieben, wobei die Figur die Schritte des hierbei durchgeführten Verfahrens veranschaulicht.

### Bevorzugte Ausführung der Erfindung

Ein Schritt 10 des Vorheizens bereitet die eigentliche Zündung 12 (Zusammenfassung mehrerer Schritte) vor. Im Rahmen der Vorheizung wird eine Entladungslampe mit einer Heizfrequenz f_{heiz} beaufschlagt. Typischerweise handelt es sich hierbei um eine Frequenz von ca. 90 kHz, die für ca. 300 ms auf die Heizwendeln gegeben wird, um diese vorzuheizen. Der Begriff des Vorheizens bezieht sich hierbei lediglich auf die Wendeln der Entladungslampe. Die eigentliche Temperatur der Entladungslampe bleibt durch den Schritt des Vorheizens quasi unbeeinflusst. Bei der Zündung 12 wird somit von dem Vorzustand ausgegangen, dass eine Wechselspannung die Frequenz f_{heiz} hat (Schritt 14). Es erfolgt dann eine Temperaturmessung (Schritt 16). Für die Temperaturmessung ist in einem elektronischen Vorschaltgerät der Entladungslampe ein Mikrocontroller vorgesehen, in den ein Temperatursensor integriert ist. Der Temperatursensor misst die Temperatur des elektronischen Vorschaltgeräts, die mit der der Lampe und der Umgebungstemperatur identisch ist (T_{ambiente}). In dem Mikrocontroller ist eine Tabelle abgelegt. In der Tabelle werden Temperaturwerten Frequenzwerte zugeordnet. Entweder trifft T_{ambiente} direkt einen der Temperaturwerte in der Tabelle, dann ergibt sich automatisch durch Auslesen der Tabelle ein Frequenzwert. Alternativ liegt der Umgebungstemperaturwert T_{ambiente} zwischen zwei Temperaturwerten, denen in der Tabelle Frequenzwerte zugeordnet sind. Entsprechend wird als Zündfrequenz eine Zwischenfrequenz zwischen den Frequenzwerten gewählt, die denjenigen Temperaturwerten zugeordnet sind, zwischen denen T_{ambiente} liegt. Der Zwischenfrequenzwert kann durch lineare Interpolation ermittelt werden.

Man erhält so schließlich eine Zündfrequenz f_{zünd}, die von T_{ambiente} abhängig ist (Schritt 18). Eine Steuereinheit des elektronischen Vorschaltgeräts beaufschlagt die Lampe mit einer Wechselspannung, die genau diese Zündfrequenz f_{zünd} hat. Da sich diese Zündfrequenz aus den Tabellenwerten ergibt, folgt bei störungsfreiem Betrieb automatisch die Zündung. Die Schrittfolge 12 ist damit beendet, und es kann zum Betrieb der Lampe übergangen werden (Schritt 20). Beim Betrieb der Lampe wird diese mit einer Spannung beaufschlagt, deren Frequenz fernab der Zündfrequenz f_{zünd} liegt. Während f_{zünd} üblicherweise in der Nähe einer Resonanzfrequenz des Lampensystems liegt, liegt eine Betriebsfrequenz so, dass keine Resonanzen auftreten.

Durch die Definition der Zündfrequenz f_{zünd} in Abhängigkeit von der Umgebungstemperatur T_{ambiente} erfolgt die Zündung der Entladungslampe präziser. Die Bauteile des elektronischen Vorschaltgerätes werden dadurch weniger belastet. Bei der Auslegung bestimmter Größen der Bauteile, wie etwa der Drossel oder bestimmter Kondensatoren, muss deswegen nicht mehr notwendigerweise auf bestimmte Erfordernisse bei der Zündung (überhöhte Zündspannung) Rücksicht genommen werden, was zu Ersparnissen bei der Auslegung des elektronischen Vorschaltgerätes (Reduzierung der Drosselbaugröße, somit kleinere EVG-Bauform) führen kann.

## Patentansprüche

1. Verfahren zum Zünden einer Entladungslampe, mit den Schritten:
- Bereitstellen einer Tabelle, in der Temperaturwerten Frequenzwerte zugeordnet sind,
- Messen (16) der Temperatur der Lampe oder der Lampenumgebung,
- Definieren (18) eines der gemessenen Temperatur zugeordneten Zündfrequenzwerts anhand der Tabelle,
- Beaufschlagen der Lampe mit einer Wechselspannung, die die Zündfrequenz hat.

2. Verfahren nach Anspruch 1,
**dadurch gekennzeichnet,**
**dass** die Tabelle zumindest zwei Wertepaare aus Temperaturwert und Frequenzwert umfasst, und dass beim Definieren des Zündfrequenzwerts zwischen den Werten aus der Tabelle interpoliert wird, wobei vorzugsweise eine lineare Interpolation zum Definieren des Zündfrequenzwerts erfolgt.

3. Verfahren nach Anspruch 1 oder 2,
**dadurch gekennzeichnet,**
**dass** vor dem Schritt des Beaufschlagens der Lampe mit einer Wechselspannung, die die Zündfrequenz hat, die Lampe mit einer Wechselspannung beaufschlagt wird, die eine andere Frequenz als die Zündfrequenz hat, um Wendeln der Lampe vorzuheizen.

4. Elektronisches Vorschaltgerät für eine Entladungslampe mit:
- einem Wechselspannungsgenerator, der zum Zünden und Betreiben der Entladungslampe eine Wechselspannung mit verschiedenen Frequenzen erzeugt,
- einer Steuereinheit, die Steuersignale für den Wechselspannungsgenerator erzeugt, mit dem die Frequenz der Wechselspannung festgelegt wird,
wobei der Steuereinheit ein Speicher zugeordnet ist, in dem eine Tabelle mit Wertepaaren aus Temperaturwert und Frequenzwert abgelegt ist,
- einen Temperatursensor, dessen Temperaturmesswerte dem Steuergerät zuführbar sind
**gekennzeichnet durch**
- **dass** die Steuereinheit dazu ausgelegt ist, **durch** Interpolation von Werten aus der Tabelle zu einem von dem Temperatursensor empfangenen Temperaturmesswert eine Zündfrequenz zu berechnen und den Wechselspannungsgenerator so anzusteuern, dass er eine Wechselspannung abgibt, die die berechnete Zündfrequenz hat.

5. Elektronisches Vorschaltgerät nach Anspruch 4,
**dadurch gekennzeichnet,**
**dass** die Steuereinheit in einem Mikrocontroller ausgebildet ist, in den der Temperatursensor integriert ist.

6. Entladungslampe, an der ein elektronisches Vorschaltgerät nach einem der Ansprüche 4 oder 5 angeordnet ist.

## Claims

1. Method for starting a discharge lamp, having the steps of:
- providing a table in which frequency values are assigned to temperature values,
- measuring (16) the temperature of the lamp or of the lamp environment,
- defining (18) a starting frequency value which has been assigned to the measured temperature using the table,
- applying an AC voltage which has the starting frequency to the lamp.

2. Method according to Claim 1, **characterized in that** the table comprises at least two value pairs comprising a temperature value and a frequency value, and **in that** interpolation is carried out between the values from the table when defining the starting frequency value, with preferably a linear interpolation being used for defining the starting frequency value.

3. Method according to Claim 1 or 2, **characterized in that**, prior to the step of applying an AC voltage which has the starting frequency to the lamp, an AC voltage which has a different frequency than the starting frequency is applied to the lamp in order to preheat filaments of the lamp.

4. Electronic ballast for a discharge lamp with:
- an AC voltage generator, which generates an AC voltage with different frequencies for starting and operating the discharge lamp,
- a control unit, which generates control signals for the AC voltage generator, with which the frequency of the AC voltage is fixed,
the control unit being assigned a memory in which a table with value pairs comprising a temperature value and a frequency value is stored,
- a temperature sensor, whose measured temperature values can be supplied to the control device,
**characterized**
- **in that** the control unit is designed to calculate a starting frequency by means of interpolation of values from the table to form a measured temperature value received by the temperature sensor and to drive the AC voltage generator in such a way that it emits an AC voltage which has the calculated starting frequency.

5. Electronic ballast according to Claim 4, **characterized in that** the control unit is formed in a microcontroller, in which the temperature sensor is integrated.

6. Discharge lamp with an electronic ballast according to either of Claims 4 and 5 arranged thereon.

## Revendications

1. Procédé d'amorçage d'une lampe à décharge comprenant les stades dans lesquels :
- on prépare une table dans laquelle des valeurs de température sont associées à des valeurs de fréquence,
- on mesure ( 16 ) la température de la lampe ou autour de la lampe,
- on définit au moyen de la table une valeur de fréquence d'amorçage associée à la température mesurée,
- on alimente la lampe en une tension alternative qui a la fréquence d'amorçage.

2. Procédé suivant la revendication 1,
**caractérisé**
**en ce que** la table comprend au moins deux paires de valeurs composées de la valeur de la température et de la valeur de la fréquence et en ce que lors de la définition de la valeur de la fréquence d'amorçage, on interpole entre les valeurs de la table en effectuant de préférence une interpolation linéaire pour la définition de la valeur de la fréquence d'amorçage.

3. Procédé suivant la revendication 1 ou 2,
**caractérisé**
**en ce qu'**avant le stade d'alimentation de la lampe en une tension alternative qui a la fréquence d'amorçage, on alimente la lampe en une tension alternative qui a une fréquence autre que la fréquence d'amorçage pour préchauffer des filaments de la lampe.

4. Ballast électronique pour une lampe à décharge comprenant :
- un générateur de tension alternative qui produit, pour l'amorçage de la lampe à décharge et pour la faire fonctionner, une tension alternative ayant des fréquences différentes,
- une unité de commande qui produit des signaux de commande du générateur de tension alternative par lequel la fréquence de la tension alternative est fixée,
- dans lequel à l'unité de commande est associée une mémoire dans laquelle est mémorisée une table ayant des paires de valeurs composées de valeurs de température et de valeurs de fréquence,
- un capteur de température dont les valeurs de mesure de la température peuvent être envoyées à l'appareil de commande,
**caractérisé**
**en ce que** l'unité de commande est conçue pour calculer par interpolation de valeurs de la table en une valeur de mesure de la température reçue par le capteur de température une fréquence d'amorçage et pour commander le générateur de tension alternative de façon à ce qu'il donne une tension alternative qui a la fréquence d'amorçage calculée.

5. Ballast électronique suivant la revendication 4,
**caractérisé**
**en ce que** l'unité de commande est constituée en un microcontrôleur dans lequel le capteur de température est intégré.

6. Lampe à décharge sur laquelle est monté un ballast électronique suivant l'une des revendications 4 ou 5.
